# EUROPÄISCHE PATENTANMELDUNG

(11) **EP 1 056 176 A1**
(43) Veröffentlichungstag der Anmeldung: **29.11.2000**
(21) Anmeldenummer: 00110743.2
(22) Anmeldetag: 19.05.2000
(51) Int. Cl.: H02G 3/04

(54) **Kabelrinne mit verbesserter Biegesteifigkeit**

(30) Priorität: 26.05.1999 DE 19923841
(71) Anmelder: Rieth & Co. GmbH, D-73230 Kirchheim (DE)
(72) Erfinder: Fink, Ewald, D-73095 Albershausen (DE); Barner, Gerhard, D-73230 Kirchheim (DE)
(74) Vertreter: Patentanwälte Rüger, Barthelt & Abel

(57) **Zusammenfassung**

Bei einer Kabelrinne sind zur Erhöhung der Tragfähigkeit im Boden gerade Sicken enthalten, die sich über wenigstens 60% der Breite des Bodens erstrecken. Diese Sicken liegen rechtwinkelig zu der Längsachse der Kabelrinne. Hierdurch wird die Durchbiegung des Bodens bezüglich einer Achse vermindert, die in Längsrichtung der Kabelrinne liegt.

Bei einer anderen Ausführungsform sind die Biegekanten von Sicken durchsetzt, die sich ein Stück weit in der Seitenwand und ein Stück weit im Boden fortsetzen. Hierdurch werden die Kräfte erhöht, die erforderlich sind, um die Seitenwand aus einer zu dem Boden rechtwinkeligen Lage heraus zu drehen. Beide Maßnahmen können miteinander kombiniert werden.

## Beschreibung

In Gebäuden werden vereinzelt Kabel offen verlegt, indem sie in festgelegten Abständen mit Schellen unmittelbar an der Wand oder Decke befestigt werden. Diese Vorgehensweise ist arbeitsintensiv und erfordert entsprechend viel Platz auf der Wand oder Decke. Bei größeren Mengen von Kabeln ist dieses Verfahren ausgeschlossen und es werden statt dessen Kabelrinnen verwendet. Die Kabel liegen in den Kabelrinnen lose über- und nebeneinander. Die Kabelrinnen ihrerseits sind in großen Abständen an Auslegern befestigt, die in dem Gebäude angebracht sind, beispielsweise über Deckenstiele oder durch unmittelbare Montage an der Wand.

Der Abstand zwischen den Auslegern darf ein bestimmtes Maß nicht überschreiten, weil sonst die Kabelrinnen unter der Last der darin liegenden Kabel durchknicken würden.

Die mögliche freitragend überspannt Strecke hängt von dem Querschnitt der Kabelrinne und der Blechqualität bzw. Stärke ab. Herstellerseits ist man bemüht, die überspannbare Strecke bei möglichst geringer Blechstärke so groß wie möglich zu machen.

Beim Belasten der Kabelrinne werden die auftretenden Biegekräfte im Wesentlichen nur durch die Seitenwände abgetragen. In den Seitenwänden tritt im oberen Bereich eine Druckspannung und im unteren Bereich also angrenzend an den Boden eine Zugspannung auf. In Verbindung mit dem zur Versteifung vorgesehen Umbug am oberen Rand der Seitenwände führt die Druckspannung dazu, dass sich die Seitenwände beim Durchbiegen der Kabelrinne unter Last zur Mitte der Kabelrinne hin neigen. Wenn diese Neigung der Seitenwände ein bestimmtes Maß überschritten hat, bricht lawinenartig die Festigkeit der Kabelrinne zusammen und sie knickt durch.

Diesem Einwärtsbiegen hat man bislang versucht dadurch entgegen zu wirken, dass man für größere Spannweiten stärkere Blechqualitäten vorgesehen hat.

Ausgehend hiervon ist es Aufgabe der Erfindung eine Kabelrinne zu schaffen, die bei gleicher Blechqualität eine größere Spannweite zulässt oder bei gegebener Spannweite eine Verminderung der Blechqualität gestattet.

Diese Aufgabe wird erfindungsgemäß durch eine Kabelrinne mit den Merkmalen des Anspruches 1 oder eine Kabelrinne mit den Merkmalen des Anspruches 2 gelöst.

Genaue Betrachtung bei der Verformung der Kabelrinne unter Last haben gezeigt, dass das Einwärtsbiegen der Seitenwände unter Last zwei unterschiedliche Ursachen hat. Durch die Last der eingelegten Kabel wird die Kabelrinne nicht nur um eine Querachse durchgebogen, sondern es wird außerdem der Boden um eine Achse gekrümmt, die parallel zur Längserstreckung der Kabelrinne verläuft. Der Boden bekommt dadurch eine nach oben offene konkave Gestalt, die zwangsläufig dazu neigt die Seitenwände einwärts zu neigen, selbst wenn sich der Winkel zwischen der Seitenwand und dem Boden nicht verändert.

Eine Erhöhung der Tragfestigkeit der Kabelrinne kann deshalb überraschenderweise erreicht werden, indem der Boden mit einer Vielzahl von Sicken versehen wird, die quer zur Längserstreckung der Kabelrinne ausgerichtet sind. Die Sicken wirken einer Durchwölbung des Bodens zu bezüglich einer zu der Längsachse der Kabelrinne parallelen Achse entgegen und vermindern dadurch das Einwärtsneigen der Seitenwände.

Dieser Effekt ist deswegen überraschend, weil man zunächst davon ausgehen würde, dass Sicken, die dem Boden einer Kabelrinne eine wellblechartige Struktur geben, die Nachgiebigkeit des Bodens allein schon deswegen erhöhen, weil letztlich die Menge an Blech bezogen auf das Längenelement vergrößert wird und somit die Nachgiebigkeit erhöht wird. Selbst wenn der Blechanteil pro Längenelement auf Grund der Art der Herstellung der Sicken nicht vergrößert wird, so wird die Nachgiebigkeit dennoch vergrößert, weil dort, wo die Sicken aus dem Boden heraus gezogen werden, die Blechstärke verringert wird.

Die Durchwölbung des Bodens der Kabelrinne ist jedoch nicht die einzige Ursache für das Einwärtsneigen der Seitenwände. Bei einer stark belasteten Kabelrinne biegen sich die Seitenwände stärker nach innen, als es der Durchwölbung des Bodens entspricht. Dieses stärkere Einwärtsneigen hat seine Ursache in den Druckspannungen im oberen Bereich der Seitenwände in Verbindung mit der Ausrichtung des Umbugs. Die Biegekanten, an denen der Boden in die Seitenwand übergeht, wirken wie nachgiebige Gelenke.

Die zweite Möglichkeit die Tragfähigkeit bzw. die Spannweite der Kabelrinne zu vergrößern, liegt deswegen darin, im Bereich der Biegekanten der Kabelrinne kurze Sicken vorzusehen, die im Boden beginnen und sich ununterbrochen durch die seitliche Biegekante bis in die Seitenwand fortsetzen. Hierdurch wird die Rücksprungkraft gegenüber einem Einwärtsbiegen einer Seitenwand bezogen auf den Boden verstärkt.

Auch dieser Effekt ist überraschend, denn der Fachmann hätte nicht annehmen können, dass Sicken in diesem sensiblen Bereich der Kabelrinne die Festigkeit erhöhen. Infolge der Sicken im Bereich der Biegekante wird die Zugfestigkeit an dieser Stelle vermindert, so dass sich die neutrale Faser der Seitenwand nach oben in Richtung auf die freie Kante verlagert, wodurch die Druckspannungen vergrößert werden. Dennoch hat sich gezeigt, dass Sicken im Übergangsbereich vom Boden zur Seitenwand dazu beitragen können, die Spannweite zu vergrößern.

Besonders große Spannweiten können erreicht werden, wenn die Kabelrinne sowohl mit Sicken versehen wird, die im wesentlichen über die Breite des Bodens durchlaufen, als auch Sicken, die durch die seitliche Biegekante hindurch verlauten.

Wenn Sicken verwendet werden, die durch die seitliche Biegekante bis in die Seitenwand hinein verlauten, reichen die Sicken zweckmäßigerweise bis ca. auf die halbe Höhe der Seitenwand bzw. neutrale Faser.

Es ist auch möglich Sicken zu verwenden, deren Länge gemessen ab der Biegekante im Bodenbereich genauso groß ist, wie im Bereich der Seitenwand.

Um die Kabelrinne auf einfache Weise mit den Auslegern zu verbinden, enthält der Boden zweckmäßigerweise Langlöcher. Damit diese Langlöcher ein rasterfreies Verlegen ermöglichen und mit den Sicken nicht kollidieren, sind die Sicken neben jeder Seitenwand in zwei Reihen angeordnet und zwar so, dass jeweils ein Langloch der einen Reihe mit einem Zwischenraum zwischen zwei Langlöchern der anderen Reihe korrespondiert. Die Langlöcher sind jeweils länger als die Zwischenräume, womit in Längsrichtung gesehen eine Überdeckung auftritt.

Die lediglich durch den Boden verlaufenden Sicken reichen bis in die Zwischenräume der zweiten Reihe von Langlöchern hinein. Sinngemäß ähnliches kann auch gelten für jene Sicken, die durch die Biegekante hindurch führen. Diese reichen mit ihrem im Boden befindlichen Abschnitt bis in den Zwischenraum der ersten Reihe von Langlöchern.

Eine noch bessere Versteifung im Bereich der Langlöcher kann erreicht werden, wenn die ausschließlich auf den Boden beschränkenten Sicken zu Paaren zusammengefasst werden, und diese Sicken endseitig über gekrümmte Sickenabschnitte miteinander verbunden sind. Dadurch werden die Langlöcher von einer geschlossenen Sickenkontur umrahmt.

In die über gekrümmte Sickenabschnitte miteinander verbundenen Paare von Sicken im Boden können die Sicken einmünden, die durch die Biegekante hindurch verlaufen.

Wie die Unteransprüche zeigen, ist eine vielfältige Kombination der Sicken untereinander und in Verbindung mit den Langlöchern möglich.

In der Zeichnung sind Ausführungsbeispiele des Gegenstandes der Erfindung dargestellt, es zeigen:
Fig. 1 eine Prinzipdarstellung eines Kabeltragsystems, in einer perspektivischen Teilansicht, und
Fig. 2 bis 5 verschiedene Ausführungsbeispiele der erfindungsgemäßen Kabelrinnen, in einer perspektiveischen Ausschnittsdarstellung.

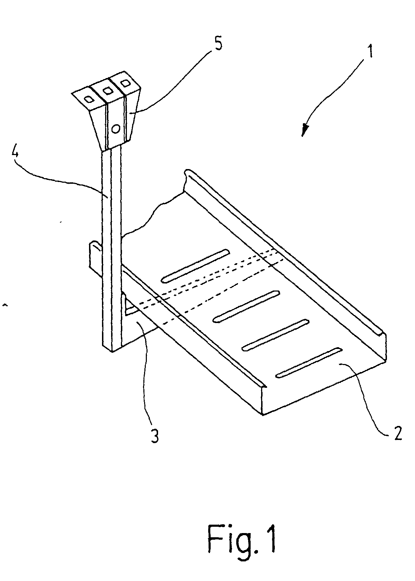

Fig. 1 zeigt ein Kabeltragsystem 1 in einer perspektivischen Ansicht. Das Kabeltragsystem 1, von dem lediglich ein Ausschnitt dargestellt ist, dient dazu in einem Gebäude größere Bündel von Kabeln zu verlegen. Die nicht dargestellten Kabel liegen in sogenannten Kabelrinnen 2.

Die Kabelrinnen 2 liegen in größeren Abständen von mehreren Meter auf Auslegern 3, die an Hängestielen 4 befestigt sind. Die Anbringung des Hängestiels 4 an der nicht dargestellten Decke des Gebäudes erfolgt mit Kopfplatten 5.

Fig. 1 zeigt eine hängende Montage des Stiels 4. Statt der hängenden Montage kommt auch eine stehende Montage in Frage, oder es können die Ausleger unmittelbar an der Wand mit Hilfe von Zwischenplatten befestigt werden.

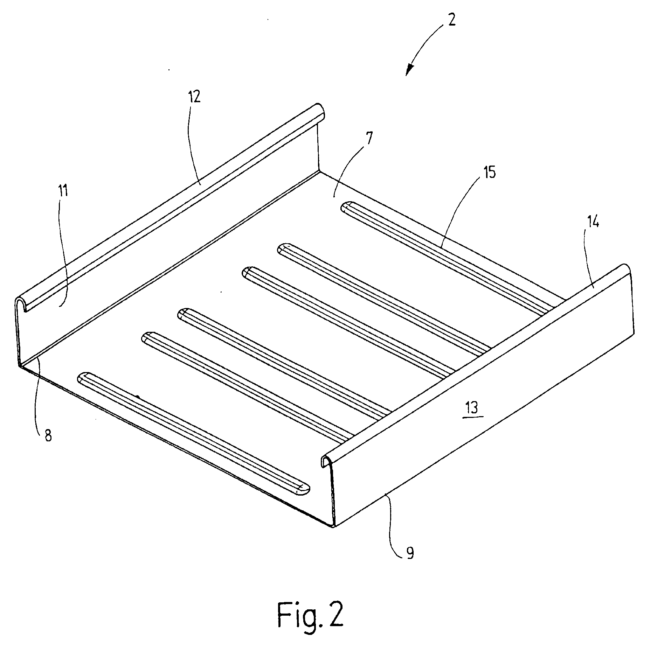

Fig. 2 zeigt in einer vergrößerten Darstellung die Gestalt der Kabelrinne 2; sie besteht aus einem Blechformteil.

Die Kabelrinne 2 weist einen im wesentlichen ebenen Boden 7 auf, der randseitig von zwei Biegkanten 8 und 9 begrenzt ist. Die beiden Biegekanten 8 und 9 verlaufen über die Länge der Kabelrinne 2 parallel zueinander, so dass der Boden 7 eine längliche, rechteckige Gestalt aufweist. An der Biegekante 8 geht der Boden 7 einstückig in eine Seitenwand 11, die an ihrem oberen, von dem Boden 7 abliegenden Ende, mit einem 180° Umbug 12 versehe ist. Die Seitenwand 11 ist, abgesehen von dem Umbug 12, ebenfalls plan und schließt mit dem Boden 7 einen Winkel von 90° ein.

Der Umbug 12 ist nach innen gerichtet, und er zeigt mit seinem offenen Ende in Richtung auf den Boden 7.

An die Biegekante 9 schließt sich ebenfalls einstückig eine Seitenwand 13 an, deren freies Ende mit einem Umbug 14 versehen ist. Der Umbug 14 liegt an der Innenseite der Seitenwand 13, also jener Seite, die der Seitenwand 11 zugekehrt ist, und öffnet sich in Richtung auf den Boden 7. Die Seitenwand 13 ist auf Grund ihrer Gestaltung spiegelsymmetrisch zu der Seitenwand 11. Sie schließt mit dem Boden 7 ebenfalls einen Winkel von 90° ein.

Der Boden 7 zusammen mit den beiden Seitenwänden 11 und 13 bildet eine im Querschnitt gesehen rechtwinkelige, U-förmig Rinne, deren Breite gemessen als Abstand zwischen den Biegekanten 8 und 9 deutlich größer ist, als die Höhe der beiden Seitenwände 11 und 13.

Zur Erhöhung der Biegesteifigkeit des Bodens 7 bezüglich einer Achse, die parallel zu der Längserstreckung der Kabelrinne 2 verläuft, ist der Boden 7 mit einer Vielzahl von Sicken 15 versehen.

Die Sicken 15 sind gerade verlaufende Sicken, deren Längsachse auf den beiden Biegekanten 8 und 9. Diese Sicken 15 haben eine teilkreis- oder trapezförmige Gestalt und wölben sich in dieselbe Richtung, in der auch die beiden Seitenwände 11 und 13 von dem Boden 7 abgehen. Die Sicken 15 erstrecken sich im wesentlichen über mehr als 50% der Breite des Bodens 7, vorzugsweise über nahezu die gesamte Breite des Bodens 7. Sie können jedoch auch wie gezeigt in einem deutlichen Abstand von der jeweiligen Biegekante 8 und 9 enden. In jedem Falle sind sie zweckmäßigerweise mittig zwischen den beiden Biegekanten 8 und 9 zentriert.

Die Sicken 15 können längs der Längserstreckung der Kabelrinne 2 äquidistant verteilt sein oder wie in Fig. 2 gezeigt jeweils Paare mit kleinem und größerem Abstand bilden.

Wenn die Kabelrinnen 2 nach Fig. 2 wie in Fig. 1 angedeutet im großen Abstand auf Auslegern 3 aufliegt, wird sich ihr Boden 7 wegen der quer zur Belastungsrichtung verlaufenden Sicken 15 um die Längsachse weniger durchbiegen als bei einer Kabelrinne mit gleicher Blechqualität und gleichem Querschnitt, die nicht die Sicken 15 enthält. Auf Grund der geringeren Durchwölbung des Bodens 7 bezüglich einer zu der Längsachse der Kabelrinne 2 parallelen Achse neigen sich die beiden Seitenwände 11 und 13 weniger stark nach innen. Die Kabelrinne 2 kann deswegen bei gleicher Spannweite und gleicher Blechqualität stärker belastet werden als eine Kabelrinne nach dem Stand der Technik. Wenn die Belastbarkeit nicht gesteigert werden soll, kann bei gleicher Blechqualität die Spannweite erhöht werden, oder es kann bei gleicher Spannweite, gleicher Belastbarkeit eine geringere Blechqualität zum Einsatz kommen.

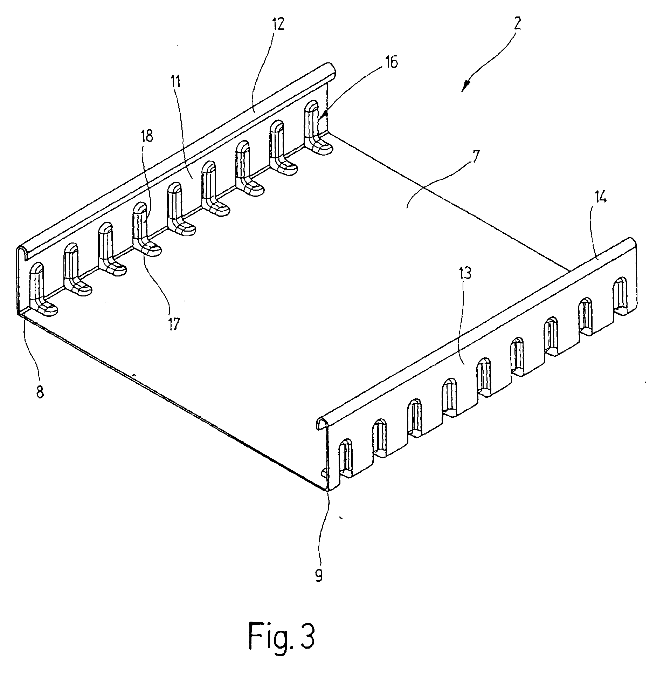

In Fig. 3 ist eine andere Ausführungsform der erfindungsgemäßen Kabelrinne 2 gezeigt. Bei der Kabelrinne nach Fig. 3 sind Sicken 16 vorgesehen, die jeweils durch die Biegkante 8 und 9 verlaufen. Die Sicken 16 sind bezogen auf die Längsrichtung der Kabelrinne 2 äquidistant verteilt.

Jede der Sicken 16 setzt sich aus einem Abschnitt 17 zusammen, der im Boden verläuft und einem Abschnitt 18, der sich in der betreffenden Seitenwand 11 bzw. 13 befindet. Der Abschnitt 17 verläuft ausgehend von der jeweiligen Biegekante 8 oder 9 jeweils nur ein kurzes Stück in dem Boden 7, wobei er dort einen geraden Sickenabschnitt entstehen lässt, dessen Längsachse rechtwinkelig zu der Biegekante 8 bzw 9 verläuft.

Der Sickenabschnitt 18 ist ebenfalls gerade und seine Längsachse liegt rechtwinklig zu der Biegekante 8 bzw 9. Damit steht die Längsachse des Sickenabschnitts 18 auch senkrecht auf dem betreffenden Umbug 12 oder 14. Die beiden Sickenabschnitte 17 und 18 gehen glatt ineinander über, wodurch die Biegekanten 8 und 9 auf Grund der Sicken 16 eine leicht wellenförmige Gestalt bekommen, wie dies in Fig. 3 bei der Biegekante 9 deutlich zu erkennen ist.

Da sich die Sicken 16 ununterbrochen durch die Biegekanten 8 und 9 hindurch fortsetzen, wird die jeweilige Biegekante 8 und 9 ausgesteift, insofern als eine größere Kraft erforderlich ist, um den Winkel, den die betreffenden Seitenwand 11 oder 13 mit dem Boden 7 einschließt, zu verändern.

Wenn die erfindungsgemäße Kabelrinne 2 nach Fig. 3 auf Auslegern aufgelegt und mit Kabeln belastet wird, wird sie sich auf Grund der Last zwischen den Auslegern nach unten durchwölben. Die Belastung der Kabelrinne hat im oberen Bereich der Seitenwände 11 und 13 Druckspannungen zur Folge, die in Verbindung mit dem Umbug 12 und 14 bestrebt sind, die Seitenwände 11 und 13 im Bereich der Biegekanten 8 und 9 gegenüber dem Boden 7 nach innen zu biegen. Diese nach innen gerichtete Biegekraft wird wegen der Sicken 16 zu einer geringeren Verformung führen, weil die Biegekanten 8 und 9 durch die Sicken 16 ausgesteift sind. Bei der erfindungsgemäßen Kabelrinne 2 nach Fig. 3 werden unter Belastung die Seitenwände 11 und 13 verglichen mit dem Stand der Technik einen näher bei 90° liegenden Winkel mit den angrenzenden Bereichen des Bodens 7 einschließen. Beim Stand der Technik ohne die Sicken 16 werden die Seiten wände bei gleicher Belastung, gleicher Spannweite und gleicher Blechqualität einen Winkel mit den angrenzenden Bodenbereichen 7 einschließen, der stärker von 90° abweichen.

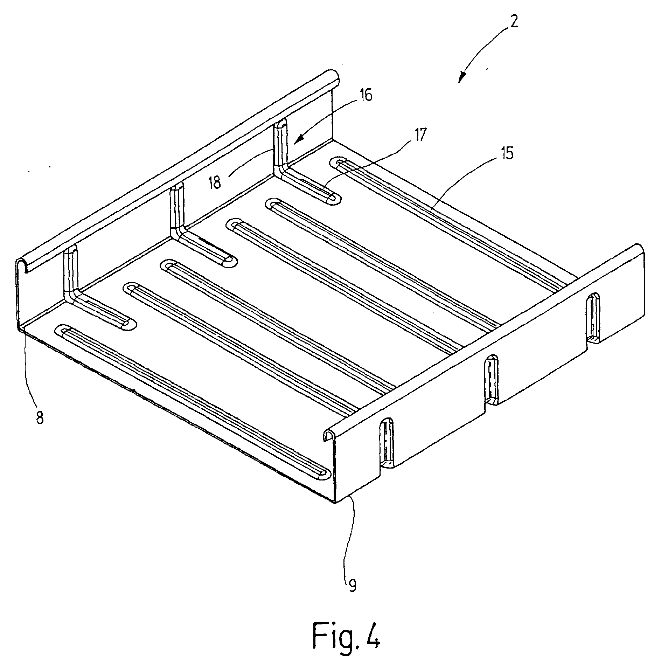

Fig. 4 zeigt eine Ausführungsform der erfindungsgemäßen Kabelrinne 2, bei der die Sicken 15 des Ausführungsbeispiels nach Fig. 2 den Sicken 16 des Ausführungsbeispiels nach Fig. 3 kombiniert sind. Die Sicken 15 sind gegenüber dem Ausführungsbeispiel nach Fig. 2 verlängert und reichen bis in die unmittelbare Nähe der Biegekanten 8 und 9.

Die Sicken 16 sind so gestaltet, dass ihr Abschnitt 17 weiter in Richtung auf die Mittelachse des Bodens 7 reicht, als bei dem Ausführungsbeispiel nach Fig. 3. Dadurch kommt eine kammartige Struktur zu Stande, wobei zwischen zwei jeweils benachbarten Sickenabschnitten 17 zwei im Boden befindliche Sicken 15 hinein führen. Der Sickenabschnitt 17 überlappt sich mit den ausschließlich im Boden befindlichen Sicken 15.

Mit der Ausführungsform nach Fig. 4 wird eine noch bessere Steifigkeit erreicht. Durch die ausschließlich in dem Boden 7 verlaufenden Sicken 15 wird dessen Durchwölbung bezüglich einer zu der Längsachse parallelen Achse vermindert. Gleichzeitig wird auch die Biegkante 8 bzw 9 ausgesteift, womit die Parallelität der Seitenwände 11 und 13 auch bei hoher Belastung gut erhalten bleibt. Die Kabelrinne 2 ist deswegen in der Lage noch höhere Lasten bei gleicher Spannweite abzutragen.

Anstatt wie in Fig. 4 die Sicken 16 und 15 kammartig in einander greifen zu lassen, besteht auch die Möglichkeit, die Sicken 15 unmittelbar in den Sickenabschnitt 17 der Sicken 16 übergehen zu lassen.

Zweckmäßigerweise reicht bei der Ausführungsform nach Fig. 3 und der Ausführungsform nach Fig. 4 der in der Seitenwand befindliche Sickenabschnitt 16 bis zur halben Höhe der Seitenwand 11 oder 13 oder ist etwas höher.

Die erfindungsgemäße Kabelrinne 2 kann in ihrem Boden 7 auch mit einer Lochung versehen sein, um ein Befestigen auf den Auslegern 3 zu ermöglichen.

Im Abstand zu der Biegekante 8 ist eine erste Reihe 21a von Langlöchern 22a in dem Boden 7 ausgebildet. Die Langlöcher haben alle untereinander die gleichen Abmessungen und liegen mit ihrer längeren Achse parallel zu der Biegkante 8. Die Länglöcher 22a sind von einander durch Zwischenräume 23a getrennt.

In einem größeren Abstand von der Biegkante 8 verläuft eine zweite Reihe 24a von Langlöchern 25a. Die Langlöcher 25 sind ebenfalls auf einer Linie aufgereiht, die sich, wie die Linie, auf der die Langlöcher 22a aufgereiht sind, parallel zu der Biegekante 8 erstreckt. Die Langlöcher 25a sind mit ihrer größeren Erstreckung in Längsrichtung der Kabelrinne 2 ausgerichtet. Die Langlöcher 25a sind untereinander durch Zwischenräume 26a getrennt.

Wie die Fig. erkennen lässt befindet sich jeweils ein Langloch 25a zwischen zwei benachbarten Sicken 15, die einen größeren Abstand von einander haben.

Die Fig. zeigt, dass die Langlöcher 22a gegenüber den Langlöchern 25a in Längsrichtung versetzt sind, der Art, dass mit jedem Zwischenraum 23a ein Langloch 25a und mit jedem Zwischenraum 26a ein Langloch 22a fluchtet. Der Zwischenraum 23a ist kleiner als das Langloch 15a, und umgekehrt ist die Länge des Langloches 22a größer als der damit korrespondierende Zwischenraum 26a. Würde man die Reihe 24a in Richtung auf die Biegekante 8 verschieben, bis die Langlöcher 25a über den Langlöchern 22a zu liegen kämen, würden die Langlöcher 25a und 22a einander endseitig überdecken. Die Überdeckung ist mindestens so groß, wie es der Breite des Langloches 22a bzw. 25a entspricht.

Neben der Biegekante 9 sind ebenfalls zwei Reihen 21b und 24b von Langlöchern 22b und 25b ausgebildet. Die Langlöcher 23b und 25b sind bezüglich der Längsachse der Kabelrinne 2 spiegelbildlich zu den Langlöchern 22a und 25a. Diese bedeutet, mit jedem Langloch 22a fluchtet ein Langloch 22b und mit jedem Langloch 25a ein Langloch 25b. Fluchten in diesem Sinne bedeutet, dass die dem Betrachter zugekehrten Enden von Langlöchern 22a und 22b auf einer Geraden liegen, die rechtwinkelig zu den beiden Biegekanten 8 und 9 verläuft. Sinngemäß das gleiche gilt für die Langlöcher 25a und 25b.

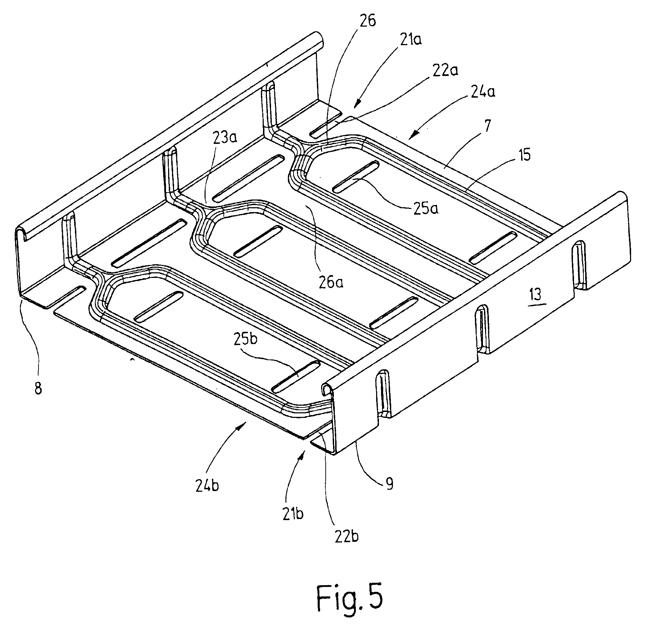

Abweichend zu den vorherigen Ausführungsbeispielen sind bei der Ausführungsform nach Fig. 5 jeweils zwei ein Langloch 25a bzw. 25b eingrenzende Sicken 15 über gekrümmte Sickenabschnitte 26 endseitig mit einander verbunden. Die gekrümmten Abschnitte 26 bilden zusammen mit dem Paar von zugeordneten Sicken 15, ein einer Rennbahn ähnliches Oval, das jeweils zwei Langlöcher 25a und 25b umschließt. An jenen Stellen, an den die bogenförmigen Abschnitte 26 der betreffenden Seitenwand 11 bzw 13 am nächsten liegen, mündet der Sickenabschnitt 17 der Sicken 16 ein. Der Sickenabschnitt 17 verläuft somit durch einen Zwischenraum 23a zwischen benachbarten Langlöchern 22a der ersten Reihe 21a. Sinngemäß das gleich, jedoch durch die Seitenwand 13 verdeckt, gilt für die Sicken 16 in der Seitenwand 13 und die dort befindlichen gekrümmten Sickenabschnitte 26.

Hinsichtlich der Festigkeit gilt in der Ausführungsform nach Fig. 5 dasselbe, was in Verbindung mit Fig. 4 bereits ausgeführt wurde.

In der Zeichnung nicht dargestellt, jedoch ebenfalls ausführbar, ist die Anbringung der ersten und der zweiten Reihe 21 und 24 von Langlöchern 22 und 25 bei einer Sickenanordnung gemäß Fig. 4. Es genügt, wenn hierzu die Sicken 15 bzw. die Sickenabschnitte 17 etwas verkürzt werden, um entsprechend Platz für die Unterbringung der Langlöcher 22 und 25 zu schaffen. Die erhaltene Struktur ähnelt der Struktur nach Fig. 5 jedoch fehlen die gekrümmten Abschnitte 26, womit die Sicken 15 und 16 nicht mehr in einander übergehen.

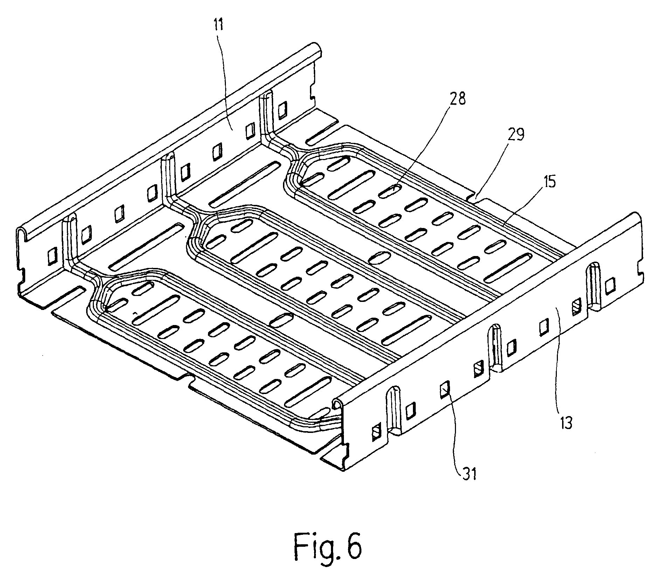

Fig. 6 zeigt schließlich, dass zusätzlich zu den Langlöchern 22 und 25 noch weitere Langlöcher 28 zwischen den Sicken 15 untergebracht werden können d.h. in dem von den Sicken 15 und dem bogenförmigen Abschnitt 26 umgrenzten Raum. Ferner können zwischen diesen umgrenzten Räumen Langlöcher 29 ausgestanzt werden, ebenso wie in den Seitenwänden 11 und 13 quadratische Öffnungen 31 enthalten sein können zur Aufnahme von Flachrundkopfschrauben mit Vierkantansatz.

Bei einer Kabelrinne sind zur Erhöhung der Tragfähigkeit im Boden gerade Sicken enthalten, die sich über wenigstens 60% der Breite des Bodens erstrecken. Diese Sicken liegen rechtwinkelig zu der Längsachse der Kabelrinne. Hierdurch wird die Durchbiegung des Bodens bezüglich einer Achse vermindert, die in Längsrichtung der Kabelrinne liegt.

Bei einer anderen Ausführungsform sind die Biegekanten von Sicken durchsetzt, die sich ein Stück weit in der Seitenwand und ein Stück weit im Boden fortsetzen. Hierdurch werden die Kräfte erhöht, die erforderlich sind, um die Seitenwand aus einer zu dem Boden rechtwinkeligen Lage heraus zu drehen. Beide Maßnahmen können miteinander kombiniert werden.

## Patentansprüche

1. Kabelrinne (2) zum Verlegen von Kabeln und dergleichen,
mit einem Boden (7), der über wenigstens einen Teil der Länge der Kabelrinne (2) mit im wesentliche konstanter Breite durchläuft und seitlich von zwei Längskanten (8,9) begrenzt ist,
mit zwei Seitenwänden (11,13), die mit dem Boden (7) verbunden sind und von den Längskanten (11,13) ausgehen, und
mit wenigstens einer Gruppe von Sicken (15), die in dem Boden (7) ausgebildet und quer zu der Längserstreckung der Kabelrinne (2) ausgerichtet sind.

2. Kabelrinne nach Anspruch 1, dadurch gekennzeichnet, dass die Sicken (15) in dem Boden (7) sich über wenigstens 50% der Breite des Bodens (7) erstrecken.

3. Kabelrinne (2) zum Verlegen von Kabeln und dergleichen,
mit einem Boden (7), der über wenigstens einen Teil der Länge der Kabelrinne (2) mit im wesentliche konstanter Breite durchläuft und seitlich von zwei Längskanten (8,9) begrenzt ist,
mit zwei Seitenwänden (11,13), die mit dem Boden (7) im Bereich der Längskanten einstückig verbunden sind und von den Längskanten (11,13) ausgehen, und
mit wenigstens einer Gruppe von Sicken (16), die ausgehend von dem Boden (7) die Längskante durchquerend sich ununterbrochen bis in die Seitenwände (11,13) fortsetzen.

4. Kabelrinne nach den Ansprüchen 1 oder 3, dadurch gekennzeichnet, dass zumindest ein Teil der Sicken (15,16) gerade sich erstreckende Sicken sind.

5. Kabelrinne nach den Ansprüchen 1 oder 3, dadurch gekennzeichnet, dass die Seitenwände (11,13) an ihrer freien Kante mit einem Umbug (12,14) versehen sind.

6. Kabelrinne nach Anspruch 3, dadurch gekennzeichnet, dass die in den Seitenwänden (11,13) befindlichen Abschnitte (18) der Sicken (16) lediglich bis höchstens 80% der Höhe der Seitenwände (11,13), jedoch nicht über die neutrale Faser hinaus reichen, gemessen ab dem Boden (7).

7. Kabelrinne nach Anspruch 3, dadurch gekennzeichnet, dass der in den Seitenwänden (11,13) befindliche Abschnitt (18) der Sicken (16) dieselbe Länge aufweist wie der in dem Boden (7) befindliche Abschnitt (17) der Sicken (16).

8. Kabelrinne nach Anspruch 1, dadurch gekennzeichnet, dass sie zusätzlich die Merkmale der Kabelrinne (2) nach einem oder mehreren der Ansprüche 2 bis 7 aufweist.

9. Kabelrinne nach Anspruch 8, dadurch gekennzeichnet, dass mit jeder Sicke (16), die durch eine der Biegkanten (8,9) verläuft, eine oder mehre Sicken (15) abwechseln, die lediglich in dem Boden (7) ausgebildet sind.

10. Kabelrinne nach Anspruch 9, dadurch gekennzeichnet, dass die Sicken (16), die durch eine der Biegkanten (8,9) verlaufen, ein Stück weit bis in den Zwischenraum zwischen benachbarten Sicken (15) hineinreichen, die lediglich in dem Boden (7) ausgebildet sind.

11. Kabelrinne nach den Ansprüchen 1 oder 3, dadurch gekennzeichnet, dass sich zumindest ein Teil der Sicken (15,16) ausgehend von dem Boden (7) bzw. der Seitenwand (11,13) nach oben in dieselbe Richtung wie die Seitenwände (11,13) bzw. nach innen erhebt.

12. Kabelrinne nach Anspruch 8, dadurch gekennzeichnet, dass die Sicken (15), die lediglich in dem Boden (7) ausgebildet sind, jeweils Paare von Sicken (15) bilden und die beiden Sicken (15) jedes Paars endseitig über gekrümmt verlaufende Sickenabschnitte (26) miteinander verbunden sind.

13. Kabelrinne nach Anspruch 12, dadurch gekennzeichnet, dass jede Sicken (16), die durch eine der Biegekanten (8,9) verläuft, in einen gekrümmt verlaufenden Sickenabschnitt (26) eines Paars von Sicken (15) einmündet, die lediglich in dem Boden (7) ausgebildet sind.

14. Kabelrinne nach Anspruch 1 oder 3, dadurch gekennzeichnet, dass wenigstens einige der Sicken (15,16) einen teilkreisförmigen Querschnitt haben.

15. Kabelrinne nach Anspruch 1 oder 3, dadurch gekennzeichnet, dass wenigstens einige der Sicken (15,16) einen trapezförmigen Querschnitt haben.

16. Kabelrinne nach den Ansprüchen 1 oder 3, dadurch gekennzeichnet, dass der Boden (7) Langlöcher (22,25) enthält.

17. Kabelrinne nach den Ansprüchen 1 oder 3, dadurch gekennzeichnet, dass sie wenigstens eine erste Reihe (21) von Langlöchern (22) enthält, die längs einer zu einer der Längskanten (8,9) parallelen Linie angeordnet sind und deren längere Achse zu der betreffenden Längskante (8,9) parallel ist, wobei zwischen jeweils zwei benachbarten Langlöchern (22) ein Zwischenraum (23) vorhanden ist,
dass sie wenigstens eine zweite Reihe (24) von Langlöchern (25) enthält, die längs einer zu der betreffenden Längskante (8,9) parallelen Linie angeordnet sind, deren längere Achse zu der betreffenden Längskante (8,9) parallel ist und die von der betreffenden Seitenwand (11,13) einen größeren Abstand haben als die Langlöcher (22) der ersten Reihe (21) von Langlöchern (22), wobei zwischen jeweils zwei benachbarten Langlöchern (25) ein Zwischenraum (26) vorhanden ist, der sich neben einem Langloch (22) der ersten Reihe (21) von Langlöchern (22) befindet, und
dass die Sicken (15,16) oder Sickenabschnitte (17) in dem Boden (7) die Zwischenräume (23,26) zwischen einer der Reihen (21,24) von Langlöchern (22,25) durchsetzen.

18. Kabelrinne nach Anspruch 17, dadurch gekennzeichnet, dass neben jeder Längskante (8,9) eine erste (21) und eine zweite (24) Reihe von Langlöchern (22,25) vorgesehen ist.

19. Kabelrinne nach Anspruch 17, dadurch gekennzeichnet, dass sämtliche Langlöcher (22,25) einer Reihe (21,24) von Langlöchern (22,25) untereinander dieselbe Länge aufweisen.

20. Kabelrinne nach Anspruch 17, dadurch gekennzeichnet, dass alle Langlöcher (22,25) dieselbe Länge aufweisen.

21. Kabelrinne nach Anspruch 17, dadurch gekennzeichnet, dass sämtliche Zwischenräume (23,26) einer jeweiligen Reihe (21,24) von Langlöchern (22,26) untereinander dieselbe Länge aufweisen.

22. Kabelrinne nach Anspruch 17, dadurch gekennzeichnet, dass alle Zwischenräume (23,26) dieselbe Länge aufweisen.

23. Kabelrinne nach Anspruch 18, dadurch gekennzeichnet, dass die Zwischenräume (23,26) der beiden zweiten Reihen (24) von Langlöchern (21) miteinander fluchten.

24. Kabelrinne nach Anspruch 17, dadurch gekennzeichnet, dass jede der Sicken (16), die durch die Biegekante (8,9) verläuft, bis in die Zwischenräume (23) der ersten Reihe (21) von Langlöchern (22) reicht.

25. Kabelrinne nach Anspruch 17, dadurch gekennzeichnet, dass jede die Sicken (15), die lediglich in dem Boden (7) verläuft, bis in die Zwischenräume (26) der zweiten Reihe (24) von Langlöchern (26) reicht.

26. Kabelrinne nach den Ansprüchen 1 oder 3, dadurch gekennzeichnet, dass sie mit Ausnahme von Endbereichen eine konstante Breite aufweist.

27. Kabelrinne nach den Ansprüchen 1 oder 3, dadurch gekennzeichnet, dass sie gerade ist.

28. Kabelrinne nach den Ansprüchen 1 oder 3, dadurch gekennzeichnet, dass die Seitenwände (11,13) die gleiche Höhe gemessen ab dem Boden (7) aufweisen.
